# EUROPEAN PATENT SPECIFICATION

(11) **EP 2 454 316 B1**
(45) Date of publication and mention of the grant of the patent: **03.04.2013**
(21) Application number: 10724946.8
(22) Date of filing: 03.06.2010
(51) Int. Cl.: C08K 5/3492, C08K 5/521, C08L 75/04

(54) **COLOR-STABLE, HALOGEN-FREE FLAME RETARDANT THERMOPLASTIC POLYURETHANE COMPOSITIONS**
FARBSTABILE, HALOGENFREIE, FLAMMWIDRIGE POLYURETHAN ZUSAMMENSETZUNGEN
COMPOSITIONS DE POLYURÉTHANE THERMOPLASTIQUES IGNIFUGEANTES SANS HALOGÈNE ET DE COULEUR STABLE

(30) Priority: 18.06.2009 US 218275 P
(43) Date of publication of application: 23.05.2012
(73) Proprietor: Dow Global Technologies LLC, Midland, MI 48674 (US)
(72) Inventor: COGEN, Jeffrey, M., Flemington, NJ 08822 (US); CHEN, Given, Shanghai 201108 (CN); TAI, Xiangyang, Shanghai 201613 (CN); BROWN, Geoffrey, D., Bridgewater, NJ 08807 (US)
(74) Representative: Hayes, Adrian Chetwynd
(86) International application number: PCT/US2010/037159
(87) International publication number: WO 2010/147761

(56) References cited:
- WO-A1-2006/121549
- US-A- 4 690 964
- US-A- 5 785 916
- DATABASE WPI Week 200523 Thomson Scientific, London, GB; AN 2005-217276 XP002596757 -& JP 2005 054040 A (OKURA IND CO LTD) 3 March 2005 (2005-03-03)
- DATABASE CA [Online] CHEMICAL ABSTRACTS SERVICE, COLUMBUS, OHIO, US; 2 September 1988 (1988-09-02), NISHAMA, HIDEMI ET AL: "Thermoplastic polyurethane compositions with excellent moldability" XP002596775 retrieved from STN Database accession no. 1988:475377 & JP 63 066257 A (FURUKAWA ELECTRIC CO., LTD., JAPAN) 24 March 1988 (1988-03-24)

## Description

### FIELD OF THE INVENTION

This invention relates to flame retardant compositions. In one aspect, the invention relates to flame retardant compositions free of halogen while in another aspect, the invention relates to flame retardant compositions comprising thermoplastic polyurethane (TPU). In yet another aspect, the invention relates to flame retardant compositions further comprising a phosphorus-based flame retardant in combination with a low molecular weight epoxide additive. In still another aspect, the invention relates to wire and cable coated with the flame retardant composition.

### BACKGROUND OF THE INVENTION

Halogen-free, flame retardant formulations comprising phosphate flame retardants in TPU polymers are under active investigation as a replacement for polyvinylchloride (PVC) polymers in personal electronics applications. One key formulation challenge is retention of color during UV-aging while maintaining a range of other properties such as heat aging, tensile strength, elongation at break, flame retardance and flexibility. Compositions having improved color retention are of continuing interest for use in the personal electronics area, particularly compositions that comprise certain preferred flame retardants such as resorcinol diphosphate or bisphenol A polyphosphate.

### SUMMARY OF THE INVENTION

The invention is a color-stable, halogen-free, flame retardant composition comprising, based on the weight of the composition:
A. 10-95 weight percent of a thermoplastic polyurethane polymer;
B. 3-50 weight percent of a phosphate-based flame retardant; and
C. 0.3-6 weight percent of a low molecular weight (<700 g/mol) epoxide additive other than a novolak polymer or an olefin-based polymer comprising an epoxy group.
The TPU is polyether or polyester based, preferred phosphorus-based flame retardants include resorcinol diphosphate and bisphenol A polyphosphate, and the molecular weight of the epoxide is typically less than 700 grams per mole (g/mol). One preferred epoxide additive is 1,3,5-triglycidyl-isocyanurate (TGIC). The composition optionally comprises a metal hydrate flame retardant, e.g., aluminum trihydroxide, a hindered amine light stabilizer (HALS), and/or a UV light absorber, e.g., benzophenone.

In one embodiment the invention is a cable or wire coated with the color-stable, halogen-free, flame retardant composition described above.

### DETAILED DESCRIPTION OF THE PREFERRED EMBODIMENT

### Definitions

All references to the Periodic Table of the Elements refer to the Periodic Table of the Elements published and copyrighted by CRC Press, Inc., 2003. Also, any references to a Group or Groups shall be to the Group or Groups reflected in this Periodic Table of the Elements using the IUPAC system for numbering groups. Unless stated to the contrary, implicit from the context, or customary in the art, all parts and percents are based on weight and all test methods are current as of the filing date of this disclosure. For purposes of United States patent practice, the contents of any referenced patent, patent application or publication are incorporated by reference in their entirety (or its equivalent US version is so incorporated by reference) especially with respect to the disclosure of synthetic techniques, product and processing designs, polymers, catalysts, definitions (to the extent not inconsistent with any definitions specifically provided in this disclosure), and general knowledge in the art.

The numerical ranges in this disclosure are approximate, and thus may include values outside of the range unless otherwise indicated. Numerical ranges include all values from and including the lower and the upper values, in increments of one unit, provided that there is a separation of at least two units between any lower value and any higher value. As an example, if a compositional, physical or other property, such as, for example, molecular weight, melt index, etc., is from 100 to 1,000, then the intent is that all individual values, such as 100, 101, 102, etc., and sub ranges, such as 100 to 144, 155 to 170, 197 to 200, etc., are expressly enumerated. For ranges containing values which are less than one or containing fractional numbers greater than one (e.g., 1.1, 1.5, etc.), one unit is considered to be 0.0001, 0.001, 0.01 or 0.1, as appropriate. For ranges containing single digit numbers less than ten (e.g., 1 to 5), one unit is typically considered to be 0.1. These are only examples of what is specifically intended, and all possible combinations of numerical values between the lowest value and the highest value enumerated, are to be considered to be expressly stated in this disclosure. Numerical ranges are provided within this disclosure for, among other things, the amounts of TPU, flame retardants, UV-stabilizer and various other components in the composition, and the various characteristics and properties by which these components are defined.

As used with respect to a chemical compound, unless specifically indicated otherwise, the singular includes all isomeric forms and vice versa (for example, "hexane", includes all isomers of hexane individually or collectively). The terms "compound" and "complex" are used interchangeably to refer to organic-, inorganic- and organometal compounds. The term, "atom" refers to the smallest constituent of an element regardless of ionic state, that is, whether or not the same bears a charge or partial charge or is bonded to another atom. The term "amorphous" refers to a polymer lacking a crystalline melting point as determined by differential scanning calorimetry (DSC) or equivalent technique.

The terms "comprising", "including", "having" and their derivatives are not intended to exclude the presence of any additional component, step or procedure, whether or not the same is specifically disclosed. In order to avoid any doubt, all compositions claimed through use of the term "comprising" may include any additional additive, adjuvant, or compound whether polymeric or otherwise, unless stated to the contrary. In contrast, the term, "consisting essentially of" excludes from the scope of any succeeding recitation any other component, step or procedure, excepting those that are not essential to operability. The term "consisting of" excludes any component, step or procedure not specifically delineated or listed. The term "or", unless stated otherwise, refers to the listed members individually as well as in any combination.

"Composition" and like terms mean a mixture or blend of two or more components.

"Blend," "polymer blend" and like terms mean a blend of two or more polymers. Such a blend may or may not be miscible. Such a blend may or may not be phase separated. Such a blend may or may not contain one or more domain configurations, as determined from transmission electron spectroscopy, light scattering, x-ray scattering, and any other method known in the art.

"Polymer" means a compound prepared by reacting, i.e., polymerizing, monomers, whether of the same or a different type. The generic term polymer thus embraces the term homopolymer, usually employed to refer to polymers prepared from only one type of monomer, and the term interpolymer as defined below. It also embraces all forms of interpolymers, e.g., random, block, homogeneous, heterogeneous, etc. The terms "ethylene/α-olefin polymer" and "propylene/α-olefin polymer" are indicative of interpolymers as described below.

"Interpolymer" means a polymer prepared by the polymerization of at least two different monomers. This generic term includes copolymers, usually employed to refer to polymers prepared from two different monomers, and polymers prepared from more than two different monomers, e.g., terpolymers, tetrapolymers, etc.

"Olefin polymer", "olefinic polymer", "olefinic interpolymer", "polyolefin" and like terms mean a polymer derived from simple olefins. Representative polyolefins include polyethylene, polypropylene, polybutene, polyisoprene and their various interpolymers.

"Ethylene polymer", "polyethylene" and like terms mean a polymer containing units derived from ethylene. Ethylene polymers typically comprises at least 50 mole percent (mol%) units derived from ethylene.

"Polymer compound" and like terms mean a physical blend of a polymer with one or more additives, compounds or other polymers.

"Halogen-free" and like terms mean that the compositions of this invention are substantially without halogen content, i.e., contain less than 0.5 percent by weight halogen as measured by appropriate analytical methods that are known in the art to be specific and reliable for halogens. Preferably, the materials fit the definition of halogen-free that is commonly used for electrical and optical cables, i.e., IEC 60754-2, "Determination of the Degree of Acidity of Gases Evolved during the Combustion of Materials Taken from Electric Cables by Measuring pH and Conductivity." To be considered "halogen-free" per the test method, the pH and conductivity values outlined in the standard should be met for the material. IEC-60754-2 recommended values for classification as "halogen-free" are a pH of not less than 4.3 when related to one liter of water and a conductivity value not in excess of 10 µS/mm when related to one liter of water. Halogen content of less than this amount is considered inconsequential to the efficacy of the composition as a wire or cable covering, and the presence of such amounts are typically the result of contaminants collected in the preparation process.

"Color stable" and like terms mean that the color of the compositions of this invention experience a Delta E after aging of less than 8, preferably less than 5 and more preferably less than 3, after 300 hours of exposure to UV radiation according to ASTM D4459 using an Atlas Ci5000 Xenon Weather-Ometer® equipped with a Type "S" borosilicate inner filter and a soda lime outer filter providing energy output of 0.8 watts per square meter (W/m²) at 420 nanometers (nm). This is a test condition typically used to model exposure to sunlight through window glass.

"Colorant" and like terms mean pigments or dyes or other substances used to impart hue and chroma to a composition or article.

"Hindered amine light stabilizer", "HALS", and like terms mean an additive used to light stabilize the compositions of this invention, the stabilizer having at least one secondary or tertiary amine group.

### Thermoplastic Polyurethane (TPU)

The polyurethane of component A has no limitation in respect of its formulation, other than it is thermoplastic, which means it is prepared from substantially difunctional ingredients, for example, organic diisocyanates and components being substantially difunctional in active hydrogen containing groups. However, sometimes minor proportions of ingredients with functionalities higher than two may be employed. This is particularly true when using extenders such as glycerin, trimethylolpropane, and the like. Such thermoplastic polyurethane compositions are generally referred to as TPU materials. Accordingly, any of the TPU materials known in the art can be employed in the present compositions. For representative teaching on the preparation of TPU materials see Polyurethanes: Chemistry and Technology, Part II, Saunders and Frisch, 1964 pp 767 to 769, Interscience Publishers, New York, N.Y. and Polyurethane Handbook, Edited by G. Oertel 1985, pp 405 to 417, Hanser Publications, distributed in U.S.A. by Macmillan Publishing Co., Inc., New York, N.Y. For particular teaching on various TPU materials and their preparation see USP 2,929,800; 2,948,691; 3,493,634; 3,620,905; 3,642,964; 3,963,679; 4,131,604; 4,169,196; Re 31,671; 4,245,081; 4,371,684; 4,379,904; 4,447,590; 4,523,005; 4,621,113; and 4,631,329.

The preferred TPU is a polymer prepared from a mixture comprising an organic diisocyanate, at least one polymeric diol and at least one difunctional extender. The TPU may be prepared by the prepolymer, quasi-prepolymer, or one-shot methods in accordance with the methods described in the incorporated references above.

Di-isocyanates suitable for use in preparing the hard segment of the polyurethanes according to this invention include aromatic, aliphatic, and cycloaliphatic di-isocyanates and combinations of two or more of these compounds. An example of a structural unit derived from di-isocyanate (OCN-R-NCO) is represented by formula (I) below:

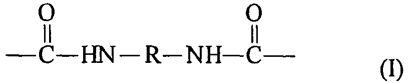

in which R is an alkylene, cycloalkylene, or arylene group. Representative examples of these di-isocyanates can be found in USP 4,385,133, 4,522,975 and 5,167,899. Preferred di-isocyanates include, but are not limited to, 4,4'-di-isocyanatodiphenyl-methane, p-phenylene di-isocyanate, 1,3-bis(isocyanatomethyl)-cyclohexane, 1,4-di-isocyanatocyclohexane, hexamethylene di-isocyanate, 1,5-naphthalene di-isocyanate, 3,3'-dimethyl-4,4'-biphenyl di-isocyanate, 4,4'-di-isocyanato-dicyclohexylmethane, and 2,4-toluene di-isocyanate. More preferred are 4,4'-di-isocyanato-dicyclohexylmethane and 4,4'-di-isocyanato-diphenylmethane. A preferred is 4,4'-di-isocyanatodiphenylmethane.

Di-isocyanates also include aliphatic and cycloaliphatic isocyanate compounds, such as 1,6-hexamethylene-di-isocyanate; ethylene di-isocyanate; 1-isocyanato-3,5,5-trimethyl-1-3-isocyanatomethylcyclohexane; 2,4- and 2,6-hexahydrotoluenediisocyanate, as well as the corresponding isomeric mixtures; 4,4'-, 2,2'- and 2,4'-dicyclohexylmethanedi-isocyanate, as well as the corresponding isomeric mixtures. Also, 1,3-tetramethylene xylene di-isocyanate can be used with the present invention. The isocyanate may be selected from organic isocyanates, modified isocyanates, isocyanate-based pre-polymers, and mixtures of two or more of these isocyanates.

Any of the organic diisocyanates previously employed in TPU preparation can be employed, including aromatic, aliphatic, and cycloaliphatic diisocyanates, and mixtures thereof. Illustrative isocyanates include, but are not limited to, methylene bis(phenyl isocyanate), including the 4,4'-isomer, the 2,4'-isomer and mixtures thereof; m-and p-phenylene diisocyanates; chlorophenylene diisocyanates; α,α'-xylylene diisocyanate; 2,4-and 2,6-toluene diisocyanate and the mixtures of these latter two isomers, which are available commercially; toluidine diisocyanate; hexamethylene diisocyanate; 1,5-naphthalene diisocyanate; isophorone diisocyanate and the like; cycloaliphatic diisocyanates, such as methylene bis(cyclohexyl isocyanate), including the 4,4'-isomer, the 2,4'-isomer and mixtures thereof, and all the geometric isomers thereof, including trans/trans, cis/trans, cis/cis, and mixtures thereof; cyclohexylene diisocyanates (1,2-; 1,3-; or 1,4-); 1-methyl-2,5-cyclohexylene diisocyanate; 1-methyl-2,4-cyclohexylene diisocyanate; 1-methyl-2,6-cyclohexylene diisocyanate; 4, 4'-isopropylidenebis-(cyclohexyl isocyanate); 4,4'-diisocyanatodicyclohexyl, and all geometric isomers and mixtures thereof and the like.

Also included are the modified forms of methylene bis(phenyl isocyanate). By the latter are meant those forms of methylene bis(phenyl isocyanate) which have been treated to render them stable liquids at ambient temperature (*circa* 20°C). Such products include those which have been reacted with a minor amount (up to about 0.2 equivalents per equivalent of polyisocyanate) of an aliphatic glycol or a mixture of aliphatic glycols, such as the modified methylene bis(phenyl isocyanates) described in USP 3,394,164; 3,644,457; 3,883,571; 4,031,026; 4,115,429; 4,118,411; and 4,299,347. The modified methylene bis(phenyl isocyanates) also include those, which have been treated so as to convert a minor proportion of the diisocyanate to the corresponding carbodiimide, which then interacts with further diisocyanate to form uretone-imine groups, the resulting product being a stable liquid at ambient temperatures as described, for example, in USP 3,384,653. Mixtures of any of the above-named polyisocyanates can be employed if desired.

Suitable classes of organic diisocyanates include the aromatic and cycloaliphatic diisocyanates. Preferred species within these classes are methylene bis(phenyl isocyanate) including the 4,4'-isomer, the 2,4'-isomer, and mixtures thereof, and methylene bis(cyclohexyl isocyanate), inclusive of the isomers described above. In a preferred embodiment the isocyanate is a mixture of 1,3-bis(isocyanatomethyl)cyclohexane and 1,4-bis(isocyanatomethyl)cyclohexane. In a further embodiment, these two isocyanates are present in a weight ratio of about 1 to 1.

In one embodiment, the polydiene-based polyurethane and, preferably, a polydiene diol-based polyurethane, is formed from at least one aliphatic or cyclo-aliphatic diisocyanate. In a further embodiment, both the polydiene-based polyurethane, and preferably a polydiene diol-based polyurethane, and the thermoplastic polyurethane are each, independently, formed from at least one aliphatic diisocyanate.

In one embodiment, the polydiol-based polyurethane is formed from at least one aliphatic or cyclo-aliphatic diisocyanate. In a further embodiment, both the poly diol-based polyurethane and the thermoplastic polyurethane are each, independently, formed from at least one aliphatic diisocyanate. In yet a further embodiment, the polydiol-based polyurethane comprises at least one diol made from one or more seed oil triglycerides selected from the group consisting of palmitic, stearic, oleic, linoleic and linolenic acid or ester.

The polymeric diols which can be used include those conventionally employed in the art for the preparation of TPU elastomers. The polymeric diols are responsible for the formation of soft segments in the resulting polymer, and preferably have molecular weights (number average) falling in the range from 200 to 10,000 g/mole, preferably from 400 to 4,000 g/mole, and, more preferably from 500 to 3,000 g/mole. It is not unusual, and, in some cases, it can be advantageous, to employ more than one polymeric diol. Exemplary of the diols are polyether diols, polyester diols, hydroxy-terminated polycarbonates, hydroxy-terminated polybutadienes, hydroxy-terminated polybutadiene-acrylonitrile copolymers, hydroxy-terminated copolymers of dialkyl siloxane and alkylene oxides, such as ethylene oxide, propylene oxide, and the like, and mixtures, in which any of the above polyols are employed as major component (greater than 50% weight by weight (w/w)) with amine-terminated polyethers and amino-terminated polybutadiene-acrylonitrile copolymers. Additional examples of the diols include the natural oil diols.

Suitable polyether polyols include polyoxyethylene glycols, polyoxypropylene glycols, which, optionally, have been capped with ethylene oxide residues; random and block copolymers of ethylene oxide and propylene oxide; polytetramethylene glycol; random and block copolymers of tetrahydrofuran and ethylene oxide and/or propylene oxide; and products derived from any of the above reaction with di-functional carboxylic acids or esters derived from said acids, in which latter case, ester interchange occurs, and the esterifying radicals are replaced by polyether glycol radicals. The preferred polyether polyols are random and block copolymers of ethylene and propylene oxide of functionality about 2.0 and polytetramethylene glycol polymers of functionality about 2.0.

Suitable polyester polyols include those prepared by polymerizing epsilon-caprolactone using an initiator such as ethylene glycol, ethanolamine, and the like; and those prepared by esterification of polycarboxylic acids such as phthalic, terephthalic, succinic, glutaric, adipic azelaic, and the like acids, with polyhydric alcohols, such as ethylene glycol, butanediol, cyclohexanedimethanol, and the like.

Suitable amine-terminated polyethers are the aliphatic primary diamines structurally derived from polyoxypropylene glycols. Polyether diamines of this type were available from Jefferson Chemical Company under the trademark JEFFAMINE (now available from Basell).

Suitable polycarbonates containing hydroxyl groups include those prepared by reaction of diols, such as propane-1,3-diol, butane-1,4-diol, hexan-1,6-diol, 1,9-nonanediol, 2-methyloctane-1,8-diol, diethylene glycol, triethylene glycol, dipropylene glycol, and the like, with diarylcarbonates, such as diphenylcarbonate, or with phosgene.

Suitable silicon-containing polyethers include the copolymers of alkylene oxides with dialkylsiloxanes, such as dimethylsiloxane, and the like (see, for example, USP 4,057,595 or 4,631, 329).

Suitable hydroxy-terminated polybutadiene copolymers include the compounds available under the trade name Poly BD Liquid Resins from Arco Chemical Company. Hydroxy-terminated polybutadiene copolymers are also available from Sartomer. Illustrative of the hydroxy-and amine-terminated butadiene/acrylonitrile copolymers are the materials available under the trade name HYCAR hydroxyl-terminated (HT) liquid polymers and amine-terminated (AT) liquid polymers, respectively. Preferred diols are the polyether and polyester diols set forth above.

The difunctional extender employed can be any of those known in the TPU art disclosed above. Typically the extenders can be aliphatic straight and branched chain diols having from 2 to 10 carbon atoms, inclusive, in the chain. Illustrative of such diols are ethylene glycol, 1,3-propanediol, 1,4-butanediol, 1,5-pentanediol, 1,6-hexanediol, neopentyl glycol, and the like; 1,4-cyclohexanedimethanol; hydroquinonebis-(hydroxyethyl)ether; cyclohexylenediols (1,4-, 1,3-, and 1,2-isomers), isopropylidenebis(cyclohexanols); diethylene glycol, dipropylene glycol, ethanolamine, N-methyl-diethanolamine, and the like; and mixtures of any of the above. As noted previously, in some cases, minor proportions (less than about 20 equivalent percent) of the difunctional extender may be replaced by trifunctional extenders, without detracting from the thermoplasticity of the resulting TPU; illustrative of such extenders are glycerol, trimethylolpropane, and the like.

While any of the diol extenders, described and exemplified above, can be employed alone, or in admixture, it is preferred to use 1,4-butanediol, 1,6-hexanediol, neopentyl glycol, 1,4-cyclohexanedimethanol, ethylene glycol, and diethylene glycol, either alone, or in admixture, with each other, or with one or more aliphatic diols previously named. Particularly preferred diols are 1,4-butanediol, 1,6-hexanediol and 1,4-cyclohexanedimethanol.

The chain extender is incorporated into the polyurethane in amounts determined by the selection of the specific reactant components, the desired amounts of the hard and soft segments, and the index sufficient to provide good mechanical properties, such as modulus and tear strength. The polyurethane compositions used in the practice of this invention may contain from 2 to 25, preferably from 3 to 20 and more preferably from 4 to 18, wt% of the chain extender component.

If desired, optionally, small amounts of monohydroxyl functional or monoamino functional compounds, often termed "chain stoppers," may be used to control molecular weight. Illustrative of such chain stoppers are the propanols, butanols, pentanols, and hexanols. When used, chain stoppers are typically present in minor amounts from 0.1 to 2 weight percent of the entire reaction mixture leading to the polyurethane composition.

The equivalent proportions of polymeric diol to said extender can vary considerably depending on the desired hardness for the TPU product. Generally speaking, the equivalent proportions fall within the respective range of from about 1:1 to about 1:20, preferably from about 1:2 to about 1:10. At the same time the overall ratio of isocyanate equivalents to equivalents of active hydrogen containing materials is within the range of 0.90:1 to 1.10:1, and preferably, 0.95:1 to 1.05:1.

The TPU forming ingredients can be reacted in organic solvents, but are preferably reacted, in the absence of solvent, by melt-extrusion, at a temperature of from 125°C to 250°C, preferably from 160°C to 225°C.

Frequently, but not always, a catalyst is employed to prepare the TPU used in the practice of the invention. Any of the catalysts, conventionally employed in the art, to catalyze the reaction of an isocyanate with a reactive hydrogen containing compound, can be employed for this purpose; see, for example, Saunders et al., Polyurethanes, Chemistry and Technology, Part I, Interscience, New York, 1963, pages 228-232; see also, Britain et al., J. Applied Polymer Science, 4, 207-211, 1960. Such catalysts include organic and inorganic acids salts of, and organometallic derivatives of, bismuth, lead, tin, iron, antimony, uranium, cadmium, cobalt, thorium, aluminum, mercury, zinc, nickel, cerium, molybdenum, vanadium, copper, manganese and zirconium, as well as phosphines and tertiary organic amines. Representative organotin catalysts are stannous octoate, stannous oleate, dibutyltin dioctoate, dibutyltin dilaurate, and the like. Representative tertiary organic amine catalysts are triethylamine; triethylenediamine; N, N,N',N'-tetramethylethylenediamine; N,N,N',N'-tetraethylethylenediamine, N-methylmorpholine; N-ethylmorpholine; N,N,N',N'-tetramethylguanidine; N,N,N',N'-tetramethyl-1,3-butanediamine; N,N-dimethylethanolamine; N,N-diethylethanolamine; and the like. The amount of catalyst employed, is generally within the range of 0.02 to 2.0 wt%, based on the total weight of the reactants.

As discussed above, the polyurethanes can be prepared by mixing all ingredients, at essentially the same time in a "one-shot" process, or can be prepared by step-wise addition of the ingredients in a "prepolymer process," with the processes being carried out in the presence of, or without the addition of, optional additives. The polyurethane forming reaction can take place in bulk, or in solution, with, or without, the addition of a suitable catalyst that would promote the reaction of isocyanates with hydroxyl or other functionality. Examples of a typical preparation of these polyurethanes are described in USP 5,864,001.

As discussed above, the other main component of the hard segment of the polyurethanes of the present invention is at least one chain extender, which are well know in this technology field. As is known, when the chain extender is a diol, the resulting product is a thermoplastic polyurethane (TPU). When the chain extender is a diamine or an amino alcohol, the resulting product is technically a thermoplastic polyurea (TPUU).

The chain extenders that may be used in the invention are characterized by two or more, preferably two, functional groups, each of which contains "active hydrogen atoms." These functional groups are preferably in the form of hydroxyl, primary amino, secondary amino, or mixtures of two or more of these groups. The term "active hydrogen atoms" refers to hydrogen atoms that, because of their placement in a molecule, display activity according to the Zerewitinoff test as described by Kohler in J. Am. Chemical Soc., 49, 31-81 (1927).

The chain extenders may be aliphatic, cycloaliphatic, or aromatic and are exemplified by diols, diamines, and amino alcohols. Illustrative of the difunctional chain extenders are ethylene glycol, diethylene glycol, propylene glycol, dipropylene glycol, 1,3-propanediol, 1,3-butanediol, 1,4-butanediol, 1,5-pentanediol and other pentane diols, 2-ethyl-1,3-hexanediol, 2-ethyl-1,6-hexanediol, other 2-ethyl-hexanediols, 1,6-hexanediol and other hexanediols, 2,2,4-trimethylpentane-1,3-diol, decanediols, dodecanediols, bisphenol A, hydrogenated bisphenol A, 1,4-cyclohexanediol, 1,4-bis(2-hydroxyethoxy)-cyclohexane, 1,3-cyclohexanedimethanol, 1,4-cyclohexanediol, 1,4-bis(2-hydroxyethoxy)benzene, Esterdiol 204 (propanoic acid, 3-hydroxy-2,2-dimethyl-, 3-hydroxy-2,2-dimethylpropyl ester available from TCI America), N-methylethanolamine, N-methyl iso-propylamine, 4-aminocyclo-hexanol, 1,2-diaminotheane, 1,3-diaminopropane, diethylenetriamine, toluene-2,4-diamine, and toluene-1,6-diamine. Aliphatic compounds containing from 2 to 8 carbon atoms are preferred. If thermoplastic or soluble polyurethanes are to be made, the chain extenders will be difunctional in nature. Amine chain extenders include, but are not limited to, ethylenediamine, monomethanolamine, and propylenediamine.

Commonly used linear chain extenders are generally diol, diamine or amino alcohol compounds characterized by having a molecular weight of not more than 400 g/mol (or Dalton). In this context, by "linear" it is meant that no branching from tertiary carbon is included. Examples of suitable chain extenders are represented by the following formulae: HO-(CH₂)ₙ-OH, H₂N-(CH₂)ₙ-NH₂, and H₂N-(CH₂)ₙ-OH, where "n' is typically a number from 1 to 50.

One common chain extender is 1,4-butane diol ("butane diol" or "BDO"), and is represented by the following formula: HO-CH₂CH₂CH₂CH₂-OH. Other suitable chain extenders include ethylene glycol; diethylene glycol; 1,3-propanediol; 1,6-hexanediol; 1,5-heptanediol; triethyleneglycol; 1,2-ethyl hexenediol (EHD diol); and combinations of two or more of these extenders. In one embodiment, the chain extender is 1,2-ethyl hexenediol (EHD diol).

Also suitable, are cyclic chain extenders which are generally diol, diamine or amino alcohol compounds characterized by having a molecular weight of not more than 400 g/mol. In this context, by "cyclic" it is meant a ring structure, and typical ring structures include, but are not limited to, the 5 to 8 member ring structures with hydroxyl-alkyl branches. Examples of cyclic chain extender are represented by the following formulae: HO-R-(ring)-R'-OH and HO-R-O-(ring)-O-R'-OH, where R and R' are one to five carbon alkyl chains, and each ring has 5 to 8 members, preferably all carbons. In these examples, one or both of the terminal -OH can be replaced with -NH₂. Suitable cyclic chain extenders include cyclohexane dimethanol ("CHDM") and hydroquinone bis-2-hydrxyethyl ether (HQEE). A structural unit of CHDM, a preferred cyclic chain extender, is represented by the following formula: HO-CH₂-(cyclohexane ring)-CH₂-OH.

The chain extender is incorporated into the polyurethane in amounts determined by the selection of the specific reactant components, the desired amounts of the hard and soft segments and the index sufficient to provide good mechanical properties, such as modulus and tear strength. The polyurethane compositions used in the practice of this invention may contain from 2 to 25, preferably from 3 to 20 and more preferably from 4 to 18, wt% of the chain extender component.

If desired, optionally, small amounts of monohydroxylfunctional or monoaminofunctional compounds, often termed "chain stoppers," may be used to control molecular weight. Illustrative of such chain stoppers are the propanols, butanols, pentanols, and hexanols. When used, chain stoppers are typically present in minor amounts from 0.1 to 2 wt% of the entire reaction mixture leading to the polyurethane composition.

As is well known to those skilled in the art, the ratio of isocyanate to total functional groups determines the Mn of the polymer. In some cases it is desirable to use a very slight excess of isocyanate.

For linear, high Mn polymers, starting materials with two functional groups per chain are desirable. However, it is possible to accommodate starting materials with a range of functionality. For example, a polydiene with one functional end could be used to cap both ends of a polyurethane with the middle portion consisting of repeating isocyanate-chain extender moieties. Polydienes with more than two functional groups will form branched polymers. Although crosslinking and gels can be a problem, if the degree of functionality is too high, this can usually be controlled by process conditions. Such branched polymers will exhibit some rheological characteristics that are desirable in some cases, such as high melt strength.

As discussed above, catalysts that will promote or facilitate the formation of urethane groups may optionally be used in the formulation. Illustrative of useful catalysts are stannous octanoate, dibutyltin dilaurate, stannous oleate, tetrabutyltin titanate, tributyltin chloride, cobalt naphthenate, dibutyltin oxide, potassium oxide, stannic chloride, N,N,N,N'-tetramethyl-1,3-butanediamine, bis[2-(N,N-dimethylamino)ethyl] ether, 1,4-diazabicyclo[2.2.2]octane; zirconium chelates, aluminum chelates and bismuth carbonates. The catalysts, when used, are typically employed in catalytic amounts that may range from 0.001 wt%, and lower, to 2 wt%, and higher, based on the total amount of polyurethane-forming ingredients.

Additives may be used to modify the properties of the polyurethane used in the practice of this invention. Additives may be included in the conventional amounts as already known in the art and literature. Usually additives are used to provide specific desired properties to the polyurethanes such as various antioxidants, ultraviolet inhibitors, waxes, thickening agents and fillers. When fillers are used, they may be either organic or inorganic, but are generally inorganic such as clay, talc, calcium carbonate, silica and the like. Also, fibrous additives, such as glass or carbon fiber, may be added to impart certain properties.

The polyurethane used in the practice of the present invention is preferably prepared by reacting the functional polyester with an isocyanate, and optionally a chain extender. In the 'prepolymer' method, typically one or more functional polydienes are reacted with one or more isocyanates to form a prepolymer. The prepolymer is further reacted with one or more chain extenders. Alternatively, the polyurethanes may be prepared by a one-shot reaction of all of the reactants. Typical polyurethanes have a number average molecular weight from 5,000 to 1,000,000 g/mol, and more preferably from 20,000 to 100,000 g/mol.

In one embodiment of the invention, the polyurethane is formed from a polyester, an isocyanate and a chain extender, and preferably an aliphatic chain extender. In a preferred embodiment, these polyesters have at least one, and more preferably at least two ester groups in the molecule, and typically have a Mn from 500 to 10,000, more preferably from 1,000 to 5,000 and even more preferably from 1,500 to 3,000 g/mol.

In one embodiment, the polyurethane is formed from a composition comprising 10 to 40 wt% of di-isocyanate, preferably 15 to 35 wt% of di-isocyanate; 50 to 85 wt% of a polyester, preferably 55 to 80 wt% of a polyester, and more preferably 60 to 80 wt% of a polyester; and 2 to 15 wt% of a chain extender, preferably 2 to 10 wt% of a chain extender (each weight percentage based on the total weight of reactants). In a further embodiment, the di-isocyanate is an aliphatic or aromatic di-isocyanate, and more preferably 4,4'-diphenylmethane di-isocyanate. In yet a further embodiment, the chain extender is an aliphatic diol. In another embodiment, the polydiene diol has a Mn from 500 to 10,000, more preferably from 1,000 to 5,000 and even more preferably from 1,500 to 3,000, g/mol.

In one embodiment, the polyurethane has a density greater than, or equal to, 0.90 g/cc, preferably greater than, or equal to, 0.95 g/cc, and more preferably greater than, or equal to, 1.00 g/cc. In another embodiment, the polyurethane has a density less than, or equal to, 1.30 g/cc, preferably less than, or equal to, 1.25 g/cc, and more preferably less than, or equal to, 1.20 g/cc. In another embodiment, the polyurethane has a density from 0.90 g/cc to 1.30 g/cc, preferably from 0.95 g/cc to 1.25 g/cc, and more preferably from 1.00 g/cc to 1.20 g/cc.

In one embodiment, the polyurethane has a melt index greater than, or equal to, 0.1 g/10 min, preferably greater than, or equal to, 0.5 g/10 min, and more preferably greater than, or equal to, 1 g/10 min (as measured by ASTM D-1238-04, 190°C, 8.7kg). In another embodiment, the polyurethane has a melt index less than, or equal to, 100 g/10 min, preferably less than, or equal to, 50 g/10 min, and more preferably less than, or equal to, 20 g/10 min, (ASTM D-1238-04, 190°C, 8.7kg). In another embodiment, the polyurethane has a melt index from 0.1 g/10 min to 100 g/10 min, preferably from 0.5 g/10 min to 50 g/10 min, more preferably from 1 g/10 min to 20 g/10 min.

Preferred polyurethanes include the PELLETHANE^{™} thermoplastic polyurethane elastomers available from The Dow Chemical Company.

Additional polyurethanes suitable for use in the invention include, but are not limited to, ESTANE thermoplastic polyurethanes, TECOFLEX thermoplastic polyurethanes, CARBOTHANE thermoplastic polyurethanes, TECOPHILIC thermoplastic polyurethanes, TECOPLAST thermoplastic polyurethanes, and TECOTHANE thermoplastic polyurethanes, all available from Noveon; ELASTOLLAN thermoplastic polyurethanes and other thermoplastic polyurethanes available from BASF; and commercial thermoplastic polyurethanes available from Bayer, Huntsman and Merquinsa.

The polyurethane component of the compatibilized blends used in the practice of the invention may contain a combination of two or more suitable embodiments as described above.

If desired, the polyurethanes can have incorporated in them, at any appropriate stage of preparation, additives such as pigments, fillers, lubricants, stabilizers, antioxidants, coloring agents, fire retardants, and the like, which are commonly used in conjunction with polyurethane elastomers.

The TPUs useful in the practice of this invention are typically used in amounts of 10 to 95 wt% based on the weight of the composition. Preferably, the TPUs are used in an amount of 20 to 75, more preferably of 25 to 50, wt% based on the weight of the composition.

### Other Polymers

The TPU polymer used in practice of this invention can be used alone, in combination with one or more other TPU polymers, and/or in combination with one or more non-TPU polymers. When used in combination with one or more other polymers, the total polymer content of the composition, i.e., the TPU polymer in combination with all other polymers in the composition, is typically 10 to 95, more typically 20 to 95 and even more typically 45 to 80, wt% based on the weight of the composition. Typically the weight ratio of TPU polymer to all other polymers in the composition is between 1:>0 and 1:10, preferably between 1:>0 and 1:5 and more preferably between 1:>0 and 1:3. For purposes of these amounts and ratios, if a composition comprises two or more TPU polymers, then the TPU polymer content is the combination of all TPU polymers in the composition.

The non-TPU polymers that can be used in the compositions of this invention include any polymer that is compatible with the TPU polymer under the conditions in which the composition is ultimately put to use. These secondary polymers are typically employed to impart one or more desirable properties to the composition, e.g., tensile strength, elasticity, optical enhancement, etc. Representative polymers include polyolefins, polyesters, polyethers, polycarbonates, polyamides and the like, with the polyolefins, both functionalized and unfunctionalized, the preferred secondary polymer.

These thermoplastic olefin polymers include both olefin homopolymers and interpolymers. Examples of olefin homopolymers are the homopolymers of ethylene and propylene. Examples of the olefin interpolymers are the ethylene/α-olefin interpolymers and the propylene/α-olefin interpolymers. The α-olefin is preferably a C₃₋₂₀ linear, branched or cyclic α-olefin (for the propylene and high olefin/α-olefin interpolymers, ethylene is considered an α-olefin). Examples of C₃₋₂₀ α-olefins include propene, 1-butene, 4-methyl-1-pentene, 1-hexene, 1-octene, 1-decene, 1-dodecene, 1-tetradecene, 1-hexadecene, and 1-octadecene. The α-olefins can also contain a cyclic structure such as cyclohexane or cyclopentane, resulting in an α-olefin such as 3-cyclohexyl-1-propene (allyl cyclohexane) and vinyl cyclohexane. Although not α-olefins in the classical sense of the term, for purposes of this invention certain cyclic olefins, such as norbornene and related olefins, are α-olefins and can be used in place of some or all of the α-olefins described above. Similarly, styrene and its related olefins (for example, α-methylstyrene, etc.) are α-olefins for purposes of this invention. Illustrative polyolefin copolymers include ethylene/propylene, ethylene/butene, ethylene/1-hexene, ethylene/1-octene, ethylene/styrene, and the like. Illustrative terpolymers include ethylene/propylene/1-octene, ethylene/propylene/butene, ethylene/butene/1-octene, and ethylene/butene/styrene. The copolymers can be random or blocky.

More specific examples of olefin interpolymers useful in this invention include very low density polyethylene (VLDPE) (e.g., FLEXOMER® ethylene/1-hexene polyethylene made by The Dow Chemical Company), homogeneously branched, linear ethylene/α-olefin copolymers (e.g. TAFMER® by Mitsui Petrochemicals Company Limited and EXACT® by Exxon Chemical Company), homogeneously branched, substantially linear ethylene/α-olefin polymers (e.g., AFFINITY® and ENGAGE® polyethylene available from The Dow Chemical Company), and olefin block copolymers such as those described in USP 7,355,089 (e.g., INFUSE® available from The Dow Chemical Company). The more preferred polyolefin copolymers are the homogeneously branched linear and substantially linear ethylene copolymers. The substantially linear ethylene copolymers are especially preferred, and are more fully described in USP 5,272,236, 5,278,272 and 5,986,028.

The olefin copolymers of this category of thermoplastic polymers also include propylene, butene and other alkene-based copolymers, e.g., copolymers comprising a majority of units derived from propylene and a minority of units derived from another α-olefin (including ethylene). Exemplary propylene polymers useful in the practice of this invention include the VERSIFY® polymers available from The Dow Chemical Company, and the VISTAMAXX® polymers available from ExxonMobil Chemical Company.

Preferred olefin polymers for use in the practice of this invention are polar olefin polymers, i.e., olefin polymers containing one or more polar groups (sometimes referred to as polar functionalities). For purposes of this invention, a polar group is any group that imparts a bond dipole moment to an otherwise essentially nonpolar olefin molecule. Exemplary polar groups include carbonyls, carboxylic acid groups, carboxylic acid anhydride groups, carboxylic ester groups, epoxy groups, sulfonyl groups, nitrile groups, amide groups, silane groups and the like, and these groups can be introduced into the olefin polymer either through grafting or copolymerization. Exemplary polar olefin polymers include ethylene/acrylic acid (EAA), ethylene/methacrylic acid (EMA), ethylene-ethyl acrylate or ethylene-ethyl methacrylate, ethylene-methyl methacrylate, ethylene-butyl methacrylate, ethylene-vinyl acetate (EVA), poly(ethylene-co-vinyltrimethoxysilane) copolymer, maleic anhydride- or silane-grafted olefin polymers, and the like. Preferred polar olefin polymers include DuPont ELVAX EVA resins and AMPLIFY ethylene ethyl acrylate (EEA) copolymer from The Dow Chemical Company.

The polyolefins, particularly the ethylene polymers, useful in the practice of this invention typically have, prior to grafting, a density of less than 0.965, preferably less than 0.93, grams per cubic centimeter (g/cm³). The ethylene copolymers typically have a density greater than 0.85, preferably greater than 0.86, g/cm³. Density is measured by the procedure of ASTM D-792. Generally, the greater the α-olefin content of the interpolymer, the lower the density and the more amorphous the interpolymer. Low density polyolefin copolymers are generally characterized as semi-crystalline, flexible and having good optical properties, e.g., high transmission of visible and UV-light and low haze.

The ethylene polymers useful in the practice of this invention typically have, prior to grafting, a melt index greater than 0.10 and preferably greater than 1 gram per 10 minutes (g/10 min). The ethylene polymers typically have a melt index of less than 500 and preferably of less than 100, g/10 min. Melt index is measured by the procedure of ASTM D-1238 (190°C/2.16 kg).

The olefin polymers useful in the practice of this invention are typically used in amounts ranging from 0 to 90 wt% based on the weight of the composition. Preferably, the olefin polymers are used in an amount ranging from 0 to 40, more preferably from 0 to 25, wt% based on the weight of the composition.

### Flame Retardant

The flame retardants used in the practice of this invention are phosphates. These flame retardants may be, but not necessarily, intumescent. Examples include phenylbisdodecyl phosphate, phenylbisneopentyl phosphate, phenyl ethylene hydrogen phosphate, phenyl-bis-3,5,5'-trimethylhexyl phosphate), ethyldiphenyl phosphate, 2-ethylhexyl di(p-tolyl) phosphate, diphenyl hydrogen phosphate, bis(2-ethyl-hexyl) p-tolylphosphate, tritolyl phosphate, bis(2-ethylhexyl)-phenyl phosphate, tri(nonylphenyl) phosphate, phenylmethyl hydrogen phosphate di(dodecyl) p-tolyl phosphate, tricresyl phosphate, triphenyl phosphate, dibutylphenyl phosphate, p-tolyl bis(2,5,5'-trimethylhexyl) phosphate, 2-ethylhexyldiphenyl phosphate, and diphenyl hydrogen phosphate. The preferred flame retardants are bisphenol-A bis(diphenyl phosphate), resorcinol bis(diphenyl phosphate), and cresol bis(diphenyl phosphate).

The phosphorus-based flame retardants useful in the practice of this invention are typically used in amounts of 3 to 50 wt% based on the weight of the composition. Preferably, the phosphorus-based flame retardants are used in an amount of 5 to 40, more preferably of 5 to 30, wt% based on the weight of the composition.

### Low Molecular Weight Epoxide Additive

The low molecular weight epoxide aditives used in the practice of this invention are epoxides other than a novolak polymer or an olefin-based polymer comprising an epoxy group. The molecular weight of the epoxide is less than 700 g/mole, preferably less than 600 g/mole and more preferably less than 500 g/mole. Representative epoxides for use in this invention include, but are not limited to glycidyl ether of bisphenol A or F. They include mono, di and polyglycidyl esters, the reaction products of mono, di and polycarboxylic acids with epichlorohydrin; glycidyl ethers of aliphatic ethers of diols, triols and polyols, such as 1,2,3-propanetriol glycidyl ether; alkyl (C₁₀₋₁₆) glycidyl ether; lauryl glycidyl ether; glycerin 1,3-diglycidyl ether; ethylene diglycidyl ether; polyethylene glycol bis(glycidyl ether); 1,4-butanediol diglycidyl ether; 1,6-hexanediglycidyl ether; bis(2,3-epoxypropyl)ether; phenyl glycidyl ether; p-t-butylphenol glycidyl ether; hydroquinone diglycidyl ether; glycidyl p-glycidyloxybenzoate; p-nonylphenol glycidyl ether. The diglycidyl esters of di and polycarboxylic acids are useful for the present invention. Other glycidyl functional materials include epoxidized oil, cycloaliphatic epoxies and triglycidyl isocyanurate. Cycloaliphatic epoxy compounds useful for the invention include: 3,4-epoxycyclohexylmethyl 3,4-epoxycyclohexanecarboxylate, spiro[1,3-dioxane-5,3'-[7]oxabicyclo[4.1.0]heptane], 2-(7-oxabicyclo[4.1.0]hept-3-yl); 3,4-epoxycyclohexylmethyl 3,4-epoxycyclohexylcarboxylate; 1,2-epoxy-4-(epoxyethyl)cyclohexane; 7-oxabicyclo[4.1.0]heptane-e,4-dicarboxylic acid; bis(oxiranylmethyl)ester; 1,3,5-triglycidyl isocyanurate (TGIC); epoxidized soybean oil and epoxidized linseed oil. Suitable nonlimiting examples of epoxies include Araldite PT 810 (TGIC), Araldite 912 (a mixture of terephthalic acid diglycidyl ester and trimellitic acid triglycidyl ester), Epikote 828 (bisphenol A diglycidyl ether), Erisys GE-30 (trimethylolpropane triglycidyl ether) (TMPTGE), bis(3,4-epoxycyclohexylmethyl adipate, and 3,4-epoxycyclohexylmethyl e,4-epoxycyclohexanecarboxylate. 1,3,5-triglycidyl-isocyanurate (TGIC) is a preferred epoxide additive.

The epoxide additives useful in the practice of this invention are used in amounts ranging from 0.3 to 6, more preferably of 0.5 to 4, wt% based on the weight of the composition.

### Other Additives

The compositions of this invention may contain one or more additives other than the epoxide additive including, but not limited to, non-phosphorus flame retardants, HALS, UV light absorbers, antioxidants, curing agents, cross linking co-agents, boosters and retardants, processing aids, fillers, coupling agents, antistatic agents, nucleating agents, slip agents, plasticizers, lubricants, viscosity control agents, tackifiers, anti-blocking agents, surfactants, extender oils, acid scavengers, and metal deactivators. These additives can be used alone or in combinations of two or more, and they are used in known ways and in known amounts. In certain embodiments of the invention, the composition comprises a TPU, phosphorus-based flame retardant and an epoxide additive and at least one of a metal hydrate flame retardant, a HALS, a UV light absorber and an antioxidant. The composition may also contain additives to work in conjunction with the phosphorus-based flame retardant to cause intumescence, such as melamine or other nitrogen-containing additives or carbon sources such as pentaerythritol or dipentaerythritol.

The TPU/phosphate/epoxide compositions of this invention exhibit excellent burn performance in combination with any one of a number of different non-phosphorus-based additives, particularly color additives, e.g., carbon black, titanium dioxide, antimony oxide, etc., and non-phosphorus flame retardants such as magnesium hydroxide, aluminum trihydroxide, huntite, hydromagnesite, antimony trioxide, titanium oxide, zinc oxide, magnesium oxide, magnesium carbonate, calcium carbonate, barium sulfate, barium borate, meta-barium borate, zinc borate, meta-zinc borate, aluminum anhydride, molybdenum disulfide, clay, diatomite, kaolinite, montmorilonite, hydrotalcite, talc, silica (e.g., precipitated silica and silicates, fumed silica, etc.), white carbon, celite, asbestos, ground minerals, and lithopone. These colorants and non-phosphorus flame retardants can be used in amounts of 0.01 wt% or less to 50 wt% or more based on the weight of the composition. Typically, these additives are used in an amount ranging from 0.5 to 50, more typically from 1 to 30, wt% based on the weight of the composition.

Representative HALS that can be used in the practice of this invention include, but are not limited to, Cyasorb UV-3346 (Cytec Industries, CAS# 82451-48-7), Cyasorb UV-3529 (Cytec Industries, CAS# 19309840-7), Cyasorb UV-3641 (Cytec Industries, CAS# 106917-30-0), Cyasorb UV-3581 (Cytec Industries, CAS# 79720-19-7), Cyasorb UV-3853 (Cytec Industries, CAS# 167078-06-0), Cyasorb UV-3853S (Cytec Industries, CAS# 24860-22-8), Tinuvin 622 (Ciba Specialty Chemicals, CAS# 65447-77-0), Tinuvin 770 (Ciba Specialty Chemicals, CAS# 52829-07-9), Tinuvin 144 (Ciba Specialty Chemicals, CAS# 63843-89-0), Tinuvin 123 (Ciba Specialty Chemicals, CAS# 129757-67-1), Chimassorb 944 (Ciba Specialty Chemicals, CAS# 71878-19-8), Chimassorb 119 (Ciba Specialty Chemicals, CAS# 106990-43-6), Chimassorb 2020 (Ciba Specialty Chemicals, CAS# 192268-64-7), Lowilite 76 (Great Lakes Chemical Corp., CAS# 41556-26-7), Lowilite 62 (Great Lakes Chemical Corp., CAS# 65447-77-0), Lowilite 94 (Great Lakes Chemical Corp., CAS# 71878-19-8), Uvasil 299LM (Great Lakes Chemical Corp., CAS# 182635-99-0), and Uvasil 299HM (Great Lakes Chemical Corp., CAS# 182635-99-0), Dastib 1082 (Vocht a.s., CAS# 131290-28-3), Uvinul 4049H (BASF Corp., CAS# 109423-00-9), Uvinul 4050H (BASF Corp., CAS# 124172-53-8), Uvinul 5050H (BASF Corp., CAS# 199237-39-3), Mark LA 57 (Asahi Denka Co., Ltd., CAS# 64022-61-3), Mark LA 52 (Asahi Denka Co., Ltd., CAS# 91788-83-9), Mark LA 62 (Asahi Denka Co., Ltd., CAS# 107119-91-5), Mark LA 67 (Asahi Denka Co., Ltd., CAS# 100631-43-4), Mark LA 63 (Asahi Denka Co., Ltd. Co., Ltd. Co., CAS# 115055-30-6), Mark LA 68 (Asahi Denka Co., Ltd., CAS# 100631-44-5), Hostavin N 20 (Clariant Corp., CAS# 95078-42-5), Hostavin N 24 (Clariant Corp., CAS# 85099-51-1, CAS# 85099-50-9), Hostavin N 30 (Clariant Corp., CAS# 78276-66-1), Diacetam-5 (GTPZAB Gigiena Truda, USSR, CAS# 76505-58-3), Uvasorb-HA 88 (3V Sigma, CAS# 136504-96-6), Goodrite UV-3034 (BF Goodrich Chemical Co., CAS# 71029-16-8), Goodrite UV-3150 (BF Goodrich Chemical Co., CAS# 96204-36-3), Goodrite UV-3159 (BF Goodrich Chemical Co., CAS# 130277-45-1), Sanduvor 3050 (Clariant Corp., CAS# 85099-51-0), Sanduvor PR-31 (Clariant Corp., CAS# 147783-69-5), UV Check AM806 (Ferro Corp., CAS# 154636-12-1), Sumisorb TM-061(Sumitomo Chemical Company, CAS# 84214-94-8), Sumisorb LS-060 (Sumitomo Chemical Company, CAS# 99473-08-2), Uvasil 299 LM (Great Lakes Chemical Corp., CAS# 164648-93-5), Uvasil 299 HM (Great Lakes Chemical Corp., CAS# 164648-93-5), Nylostab S-EED (Clariant Corp., CAS# 42774-15-2). Additional preferred hindered amine light stabilizer may be listed in the Plastic Additives Handbook 5th Edition (Hanser Gardner Publications, Inc., Cincinnati, Ohio, USA, 2001). If present, then the HALS is typically present in an amount of greater than 0 to 4, more typically of 0.2 to 3 and even more typically of 0.5 to 2, wt% based on the weight of the composition.

Without being bound by theory, typically a UV stabilizer works by scavenging the free radicals and/or hydroperoxides formed by UV light damage while a UV absorber works by absorbing and dissipation the UV radiation. Suitable UV absorbers include, but are not limited to, triazines, benzoxazinones, benzotriazoles, benzophenones, benzoates, formamidines, cinnamates/propenoates, aromatic propanediones, benzimidazoles, cycloaliphatic ketones, formanilides (including oxamides), cyanoacrylates, benzopyranones, salicylates, and mixtures of two or more of these. Suitable benzophenone UV absorbers include, but are not limited to, 2-hydroxy-4-n-octyloxybenzophenone, UVINUL 3008; 2-hydroxy-4-methoxybenzophenone, UVINUL 3040; 2-hydroxy-4-methoxy-5-sulfobenzophenone or sulisobenzone, UVINUL MS 40; 2-(4-benzoyl-3-hydroxyphenoxy)-2-propenoic acid ethyl ester, CYASORB UV 2098; homopolymer of 4-(2-Acryloyloxyethoxy)-2-hydroxybenzophenone, CYASORB UV 2126; 2,2'-dihydroxy-4-methoxybenzophenone or dioxybenzone, CYASORB UV 24; 2-hydroxy-4-(2-hydroxy-3-decyloxypropoxy) benzophenone and 2-hydroxy-4-(2-hydroxy-3-octyloxypropoxy) benzophenone, MARK 1535; 2,4,4'-trihydroxybenzophenone, MAXGARD 200; 2-hydroxy-4-(isooctyloxy) benzophenone, MAXGARD 800; 2-hydroxy-4-dodecyloxybenzophenone, UVINUL 410; 2,2'-dihydroxy-4,4'-dimethoxy-5,5'-disulfobenzophenone, disodium salt, UVINUL 3048; 2,4-dihydroxybenzophenone or 4-benzoylresorcinol, UVNUL 400; 2,2'-dihydroxy-4, 4'-dimethoxybenzophenone, UVINUL D 49; 2,2',4,4'-tetrahydroxybenzophenone, UVINUL D 50; 2,2'-dihydroxy-4-(2-hydroxyethoxy)benzophenone, UVINUL X-19; 2-hydroxy-4-benzyloxybenzophenone, SEESORB 105; and mixtures of two or more of these.

Suitable benzopyranone UV absorbers include, but are not limited to, 3,3',4',5,7-pentahydroxyflavone or quercetin.

Suitable benzotriazole UV absorbers include, but are not limited to, 2-[2-hydroxy-5-(1,1,3,3-tetramethylbutyl)phenyl]benzotriazole, TINUVIN 329; 2-(2'-hydroxy-5'-(2-hydroxyethyl))benzotriazole, NORBLOC 6000; 2-(2'-hydroxy-5'-methacrylyloxyethylphenyl)-2H-benzotriazole, NORBLOC 7966; 1,1,1-tris(hydroxyphenyl) ethane benzotriazole, THPE BZT; 5-t-butyl-3-(5-chloro-2H-benzotriazol-2-yl)-4-hydroxybenzenepropanoic acid octyl ester and 3-(5-chloro-2H-benzotriazol-2-yl)-5-t-butyl-4-hydroxybenzenepropanoic acid octyl ester, TINUVIN 109; a-[3-[3-(2H-benzotriazol-2-yl)-5-t-butyl-4-hydroxyphenyl]-1-oxopropyl]-w-hydroxy poly(oxy-1,2-ethanediyl) and a-[3-[3-(2H-benzotriazol-2-yl)-5-t-butyl-4-hydroxyphenyl]-1-oxopropyl]-w-[3-[3-(2H-benzotriazol-2-yl)-5-t-butyl-4-hydroxyphenyl]-1-oxopropoxy]poly(oxy-1,2-ethanediyl), TINUVIN 1130; 2-(2-Hydroxy-3,5-di-t-butylphenyl) benzotriazole, TINUVIN 320; 2-(2-hydroxy-3-t-butyl-5-methylphenyl)-5-chloro-2H-benzotriazole, TINUVIN 326; 2-(3'-5'-di-t-butyl-2'-hydroxyphenyl)-5-chlorobenzotriazole, TINUVIN 327; 2-(2-Hydroxy-3,5-di-t-amylphenyl)benzotriazole, TINUVIN 328; 3-(2H-Benzotriazol-2-yl)-5-t-butyl-4-hydroxybenzenepropanoic acid, TINUVIN 384; 2-(2H-benzotriazol-2-yl)-4-methyl-6-dodecylphenol, TINUVIN 571; 3-(2H-benzotriazol-2-yl)-5-t-butyl-4-hydroxy-1,6-hexanediyl ester of benzenepropanoic acid and 3-(2H-benzotriazol-2-yl)-5-t-butyl-4-hydroxy-methyl ester of benzenepropanoic acid, TINUVIN 840; 2-[2-hydroxy-3,5-bis-(1,1-dimethylbenzyl) phenyl]-2H-benzotriazole, TINUVIN 900; 2-(2H-benzotriazol-2-yl)-6-(1-methyl-1-phenylethyl)-4-(1,1,3,3-tetramethylbutyl) phenol, TINUVIN 928; 3-(2H-benzotriazol-2-yl)-5-t-butyl-4-hydroxybenzenepropanoic acid, C7-9 branched and linear alkyl esters, TINUVIN 99; 2-(2-hydroxy-5-methylphenyl) benzotriazole, TINUVIN P; 2-(2'-hydroxy-3'-sec-butyl-5'-t-butylphenyl) benzotriazole, TINUVIN 350; 2-(2'-hydroxy-5'-t-butylphenyl) benzotriazole, TINUVIN PS; bis[2-hydroxy-3-(2H-benzotriazol-2-yl)-5-octylphenyl]methane, TINUVIN 360; and mixtures of two or more of these.

Suitable benzoate UV absorbers include, but are not limited to, hexadecyl 3,5-dit-butyl-4-hydroxybenzoate, CYASORB UV 2908; 3-hydroxyphenylbenzoate, SEESORB 300; ethyl-4-[[(ethylphenylamino)methylene] amino]benzoate, GIVSORB UV-1; phenyl 2-hydroxybenzoate or phenylsalicylate, SEESORB 201; 2,4-di-t-butylphenyl-3,5-di-t-butyl-4-hydroxybenzoate, TINUVIN 120; 4-bis(polyethoxy)amino acid polyethoxy ethyl ester, UVINUL P 25; 4-t-butylphenyl 2-hydroxybenzoate or 4-t-butylphenylsalicylate, SEESORB 202; and mixtures of two or more of these.

Suitable benzoxazinone UV absorbers include, but are not limited to, 2,2'-(p-phenylene) di-3,1-benzoxazin-4-one, CYASORB 3638.

Suitable cinnamates or propenoate UV absorbers include, but are not limited to, dimethyl (p-methoxybenzylidene) malonate, SANDUVOR PR 25; and 3-(4-methoxyphenyl)-2-propenoic acid 2-ethylhexyl ester or octyl p-methoxycinnamate, UVINUL 3039.

Suitable cyanoacrylate UV absorbers include, but are not limited to, ethyl-2-cyano-3,3-diphenylacrylate, UVINUL 3035; 2-ethylhexyl-2-cyano-3,3-diphenylacrylate, UVINUL 3039; 1,3-bis-[(2'-cyano-3,3'-diphenylacryloyl)oxy]-2,2-bis-{[(2-cyano-3',3'-diphenylacryloyl)oxy]methyl}propane, UVINUL 3030; and 2-cyano-3-(2-methylindolinyl) methylacrylate, UV Absorber Bayer 340.

Suitable cycloaliphatic ketone UV absorbers include, but are not limited to, 3-(4-methylbenzylidene)-D,L-camphor, GIVSORB UV-15.

Suitable formamidine UV absorbers include, but are not limited to, ethyl-4-[[(methylphenylamino)methylene]amino]benzoate, GIVSORB UV-2.

Suitable formanilide (including oxamide) UV absorbers include, but are not limited to, N-(2-ethoxyphenyl)-N'-(4-isododecylphenyl) oxamide, SANDUVOR 3206; N-[5-t-Butyl-2-ethoxyphenyl)-N'-(2-ethylphenyl) oxamide, TINUVIN 315; N-(2-ethoxyphenyl)-N'-(2-ethylphenyl) oxamide, TINUVIN 312; 2H-benzimidazole-2-carboxylic acid (4-ethoxyphenyl) amide, UVINUL FK 4105; and mixtures of two or more of these.

Suitable triazine UV absorbers include, but are not limited to, 2-[4,6-bis(2,4-dimethylphenyl)-1,3,5-triazin-2-yl]-5-octyloxyphenol, CYASORB UV 1164; 2-(4,6-diphenyl-1,3,5-triazin-2-yl)-5-hexyloxyphenol, TINUVIN 1577 FF; 2-[4-((2-Hydroxy-3-dodecyloxy-propyl)oxy)-2-hydroxyphenyl]-4,6-bis(2,4-dimethylph enyl)-1,3,5-triazine, TINUVIN 400; 2,4,6-Trianilino-p-(carbo-2'-ethylhexyl-1'-oxy)-1,3,5-triazine, UVINUL T-150; and mixtures of two or more of these.

Suitable salicylate UV absorbers include, but are not limited to, 3,3,5-trimetylcyclohexylsalicylate or homomentyylsalicylate, NEO HELIOPAN HMS; and methyl-o-aminobenzoate, NEO HELIOPAN MA.

The TINUVIN compounds are commercially available from Ciba Specialty Chemicals Corporation of Tarrytown, N.Y.; UVINULS are commercially available from BASF Corporation of Charlotte, N.C.; CYASORBS are commercially available from Cytec Industries Inc. of West Paterson, N. J.; SANDUVORS are commercially available from Clariant Corporation of Charlotte, N.C.; NORBLOCS are commercially available from Janssen Pharmaceutica of Titusville, N.J.; Quercetin is commercially available from ACROS Organics of Pittsburgh, Pa.; MAXGARDS are commercially available from Garrison Industries of El Dorado, Ark.; SEESORBS are commercially available from Shipro Kasei of Osaka, Japan; MARK compounds are commercially available from Witco Chemical of Oakland, N.J.; GIVSORBS are commercially available from Givauden-Roure Corp. of Geneva, Switzerland; and NEO HELIOPANS are commercially available from Haarmann & Reimer of Teterboro, N.J.

If present, then the UV absorber is typically present in an amount of greater than 0 to 4, more typically of 0.2 to 3 and even more typically of 0.3 to 2, wt% based on the weight of the composition.

Examples of antioxidants are as follows, but are not limited to: hindered phenols such as tetrakis[methylene(3,5-di-tert- butyl-4-hydroxyhydro-cinnamate)] methane; bis[(beta-(3,5-ditert-butyl-4-hydroxybenzyl)-methylcarboxyethyl)]sulphide, 4,4'-thiobis(2-methyl-6-tertbutylphenol), 4,4'-thiobis(2-tert-butyl-5-methylphenol), 2,2'-thiobis(4-methyl-6-tert-butylphenol), and thiodiethylene bis(3,5-di-tert-butyl-4-hydroxy)hydrocinnamate; phosphites and phosphonites such as tris(2,4-di-tert-butylphenyl)phosphite and di-tert-butylphenyl-phosphonite; thio compounds such as dilaurylthiodipropionate, dimyristylthiodipropionate, and distearylthiodipropionate; various siloxanes; polymerized 2,2,4-trimethyl-1,2-dihydroquinoline, n,n'-bis(1,4-dimethylpentyl-p-phenylenediamine), alkylated diphenylamines, 4,4'-bis(alpha, alpha-dimethylbenzyl)diphenylamine, diphenyl-p-phenylenediamine, mixed di-aryl-p-phenylenediamines. Antioxidants can be used in amounts of 0.1 to 5 wt% based on the weight of the composition.

Examples of processing aids include but are not limited to metal salts of carboxylic acids such as zinc stearate or calcium stearate; fatty acids such as stearic acid, oleic acid, or erucic acid; fatty amides such as stearamide, oleamide, erucamide, or N,N'-ethylene bis-stearamide; polyethylene wax; oxidized polyethylene wax; polymers of ethylene oxide; copolymers of ethylene oxide and propylene oxide; vegetable waxes; petroleum waxes; non ionic surfactants; and polysiloxanes. Processing aids can be used in amounts of 0.05 to 5 wt% based on the weight of the composition.

### Compounding

Compounding of the compositions can be effected by the use of standard equipment known to those skilled in the art. Examples of compounding equipment are internal batch mixers, such as a Banbury™ or Bolling™ internal mixer. Alternatively, continuous single, or twin screw, mixers can be used, such as Farrel™ continuous mixer, a Werner and Pfleiderer™ twin screw mixer, or a Buss™ kneading continuous extruder. The type of mixer utilized, and the operating conditions of the mixer, will affect properties of the composition such as viscosity, volume resistivity, and extruded surface smoothness.

A wire or cable containing an insulation layer comprising a composition of this invention can be prepared with various types of extruders, e.g., single or twin screw types. A description of a conventional extruder can be found in USP 4,857,600. An example of co-extrusion and an extruder therefore can be found in USP 5,575,965. A typical extruder has a hopper at its upstream end and a die at its downstream end. The hopper feeds into a barrel, which contains a screw. At the downstream end, between the end of the screw and the die, there is a screen pack and a breaker plate. The screw portion of the extruder is considered to be divided up into three sections, the feed section, the compression section, and the metering section, and two zones, the back heat zone and the front heat zone, the sections and zones running from upstream to downstream. In the alternative, there can be multiple heating zones (more than two) along the axis running from upstream to downstream. If it has more than one barrel, the barrels are connected in series. The length to diameter ratio of each barrel is in the range of about 15:1 to about 30:1. In wire coating where the polymeric insulation is crosslinked after extrusion, the cable often passes immediately into a heated vulcanization zone downstream of the extrusion die. The heated cure zone can be maintained at a temperature in the range of about 200 to about 350 C, preferably in the range of about 170 to about 250 C. The heated zone can be heated by pressurized steam, or inductively heated pressurized nitrogen gas.

The following examples illustrate various embodiments of this invention. All parts and percentages are by weight unless otherwise indicated.

### SPECIFIC EMBODIMENTS

### Sample Compositions

The compositions are compounded using a twin-screw extruder with cylinder temperature set at 180°C, screw speed at 144 rpm and output at 25 kg/hr. The pellet is dried at 90°C for 4 hours before injection molding.

Tensile bar I (165mm x 12.7mm x 3.18mm) is made by injection molding fitting ASTM D638. Injection is conducted through a Krauss Maffei 100 with an extrusion temperature at 170°C, a molding temperature at 30°C and an injection pressure at 800 bar.

The plaque for UV testing is prepared by compression molder at 185°C. Preheating time is about 3 minutes, followed with 2 minutes of pressing at 15 MPa. The plaque is cooled to room temperature (about 23°C) and cut into specimens that are appropriate for testing under ASTM D4459.

A burn test using compression molded specimens has been developed to compare flame retardance performance of new formulations. This test shows good correlation to the UL-94 VW-1 vertical wire burn test that is often the required burn test for flexible wiring products. The laboratory test provides for efficient formulation optimization, with preferred formulations then being scaled-up to wire product fabrication for the VW-1 burn test on the specified wire construction. The compression molded test specimens for this burn test are prepared by the following method.

A compression mold, with a mold cavity about 200mm x 100mm x 2.0mm deep is used to produce a plaque with a number of 0.5mm diameter copper wires embedded into the plaque straight across the 200mm distance. The embedded wires are held straight by tensioning them prior to compression molding. This wire tensioning is accomplished by having the 0.5mm diameter wire exit the mold cavity through 0.5 mm grooves in the seal zone and then wrapping both ends of the wire around small posts mounted in the edge of the mold. Compression molding is then performed by a 3 minute low pressure preheat at 185°C, followed by 2 minutes of 15MPa pressure to shape the plaque, and then cooling to room temperature. After cooling, a 200mm parallel blade cutter is positioned over the support wire to cut the 2.5mm wide specimens, yielding the desired specimen at 200mm long x 2.5mm x 2.0mm rectangular shape with an embedded 0.5mm diameter solid copper support wire. The embedded wire provides more results by minimizing the potential for specimen collapse during burn testing. The extra length of wire at both ends of the cut specimen is retained for use in mounting and tensioning the specimen for the burn test. After preparation, the specimens are conditioned at 23°C ± 2°C and 50 ± 2% relative humidity for at least 24 hours before flame retardant testing.

### Testing

Tensile testing is conducted on an Instron tensile tester (Model 5565 from Instron) according to ASTM D638. Heat aging is conducted at 121°C for 168 hours. Retention of tensile strength and tensile elongation are measured to show the heat aging resistance.

Melt flow rate (MFR) testing is conducted on a TINIUS OLSEN MP600 at 190°C and 2.16kg according to ASTM D 1238.

Surface hardness is measured on a UV plaque by both Shore A and Shore D, according ASTM D2240.

The lab scale burn test simulating the VW-1 test on wire products is conducted in a standard UL94 burn chamber. The embedded wire test specimen is placed in a vertical position by using the wire tail to hang one end from an upper support, and then attaching 50g load to the wire tail at the bottom end. The weight provides a vertical specimen positioning, and also provides a force to resisting undesired specimen warping during the burn testing. A paper flag (2cm x 0.5cm) is applied on the top of 200mm test section. The burner and burner calibration method from the UL-94 V-O test are used in this burn test. The burner flame is calibrated to a nominal 50 watt energy flux with a methane gas flow rate of 105ml/min and a yellow-tipped blue flame that is 20 ± 1 mm high. The burner angle is set horizontal (perpendicular to the specimen) to impinge the flame onto the sample and to minimize any polymer drip into burner tube during the test. The burner flame is applied at the bottom of the 200mm test section with the cone of the flame centered on the specimen. The distance from the flame (highest point of cone) to the bottom of the flag is about 18cm. The flame is applied for 45 continuous seconds and then removed. After flame time (AFT specimen burn time after igniter burner removal), uncharred wire length (UCL; undamaged specimen length below the flag) and uncharred flag area percentage (flag uncharred) are the key test results. Four or 5 specimens are tested for each formulation, and the averaged data is listed as the sample result. Uncharred wire length is measured from the bottom of the flag to the start of any physical damage to the wire coating while ignoring soot. The un-charred length parameter provides a good quantitative comparison of the specimens, and a difference >20mm in un-char length shows a flammability difference between samples.

UV resistance testing is conducted according to ASTM D4459 through an Atlas C15000. The inner filter is a Type "S" borosilicate and outer filter is a soda lime. The UV lamp energy output is calibrated to deliver 0.8W/m² at 420nm. Delta E is measured up to 300 hours.

### Results

As reported in the Table below, on the key properties of tensile strength, tensile elongation, aged tensile strength, aged elongation, shore hardness, hot deformation (HD), average flaming time (AFT), uncharred burn length (UCL), charring of the flag at the top of the burn specimen ("Flag unchared") and MFR, the TGIC is comparable to the epoxy novolac and the cresol novolac. However, on the very challenging property of color retention during UV aging, as measured by Delta E (listed as QUVA 420 nm in the table), the TGIC provides a significantly lower value, even after 300 hours. The inventors have demonstrated in other work that epoxy novolac or cresol novolac provided better performance on key properties compared to formulations containing no epoxy. Surprisingly, as demonstrated by the examples in the following Table, the low molecular weight epoxies of the present invention provide improved overall properties compared to the epoxy novolac or cresol novolac.

**TABLE**

| Sample Composition and Test Results | | | | | | | | |
|---|---|---|---|---|---|---|---|---|
| **Sample No.** | **1** | **2** | **3** | **4** | **5** | **6** | **7** | **8** |
| Component | | | | | | | | |
| T-1190EC (polyester TPU) | 38 | 36 | 36 | 34 | 36 | 34 | 34 | 34 |
| Epoxy Novolak | 2 | 4 | | | | | | |
| TGIC (1,3.5-tri-glycidyl-isocyanurate | | | 4 | 6 | | | 6 | 6 |
| NPCN-704 (cresol novolak) | | | | | 4 | 6 | | |
| Aluminum Trihydroxide | 45 | 45 | 45 | 45 | 45 | 45 | 45 | 45 |
| Resorcinol Diphosphate | 15 | 15 | 15 | 15 | 15 | 15 | 15 | 15 |
| AD-001 (TSAN) | 0.07 | 0.07 | 0.07 | 0.07 | 0.07 | 0.07 | 0.07 | 0.07 |
| IRGANOX 1010 | 0.6 | 0.6 | 0.6 | 0.6 | 0.6 | 0.6 | 0.6 | 0.6 |
| IRGAFOS 126 | 0.2 | 0.2 | 0.2 | 0.2 | 0.2 | 0.2 | 0.2 | 0.2 |
| IRGAFOS MD1024 | 0.1 | 0.1 | 0.1 | 0.1 | 0.1 | 0.1 | 0.1 | 0.1 |
| TINUVIN 866 | | 1 | 1 | 1 | 1 | 1 | | 1 |
| TINUVIN 328 | 0.5 | | | | | | 0.5 | |
| TINUVIN 622 | 0.5 | | | | | | 0.5 | |
| TiO₂ | 5 | 5 | 5 | 5 | 5 | 5 | 5 | 5 |
| Color Concentrate | | | | | | | | 2.5 |
| Total | 107 | 107 | 107 | 107 | 107 | 107 | 107 | 109.5 |
| | | | | | | | | |

| **Tensile Properties** | | | | | | | | |
|---|---|---|---|---|---|---|---|---|
| Tensile Strength (MPa) (Original) | | 12 | 17.9 | 16.5 | 11.8 | | | |
| Tensile Elongation (%) (Original) | | 317 | 286 | 281 | 359 | | | |
| Tensile Strength (MPa) (aging 1 week @ 121°C) | | 17.2 | 20.2 | 18.6 | 13.7 | | | |
| Tensile Elongation (%) (aging 1 week @ 121 °C) | | 318 | 272 | 261 | 256 | | | |
| Retention for TS (%) (121°C, 1 week) | | 143.3 | 112.8 | 112.7 | 116.1 | | | |
| Retention for TE (%) (121°C, 1 week) | | 100.3 | 95.1 | 92.9 | 71.3 | | | |
| | | | | | | | | |

| **Hardness** | | | | | | | | |
|---|---|---|---|---|---|---|---|---|
| Shore A | 91 | 92 | 92 | 91 | 91 | 89 | 91 | 92 |

| **Sample No.** | **1** | **2** | **3** | **4** | **5** | **6** | **7** | **8** |
|---|---|---|---|---|---|---|---|---|
| Shore D | 0 | 50 | 51 | 49 | 49 | 47 | 48 | 48 |
| Shore A (after post cure annealing) | 91 | 91 | 92 | 92 | 92 | 90 | 92 | 90 |
| Shore D (after post cure annealing) | 49 | 48 | 49 | 49 | 47 | 46 | 48 | 47 |

| TABLE (Cont'd) | | | | | | | | |
|---|---|---|---|---|---|---|---|---|
| Sample Composition and Test Results | | | | | | | | |
| **Sample No.** | **1** | **2** | **3** | **4** | **5** | **6** | **7** | **8** |
| | | | | | | | | |
| HD @ 150°C | 5.8 | 2.9 | 7.3 | 4.6 | 7.7 | 12.5 | 11.8 | NA |
| | | | | | | | | |

| **Color Retention** | | | | | | | | |
|---|---|---|---|---|---|---|---|---|
| QUVA 420nm (100 hr) | 5.8 | 5.1 | 3.2 | 2.6 | 3.5 | 3.3 | 2.2 | 1.8 |
| QUVA 420nm (200 hr) | 9.3 | 7.9 | 4.8 | 4.1 | 5.6 | 5.2 | 4.9 | 2.9 |
| QUVA 420nm (300 hr) | 12.5 | 11 | 6.4 | 5.7 | 8 | 7.5 | 6.9 | 3.9 |
| | | | | | | | | |
| AFT avg (sec) | 0 | 0 | 0 | 0 | 0.45 | 0 | 0 | 0 |
| UCL avg (mm) | 113 | 128 | 118 | 129 | 111 | 140 | 128 | 95 |
| Flag (uncharred) avg (%) | 100 | 100 | 100 | 100 | 100 | 100 | 100 | 100 |
| | | | | | | | | |
| MFR (g/10 min) | 15.7 | 18.4 | 17.1 | 22.1 | 15.5 | 15.3 | 20.5 | 13.2 |

## Claims

1. A color-stable, halogen-free, flame retardant composition comprising, based on the weight of the composition:
A. 10-95 weight percent of a thermoplastic polyurethane polymer;
B. 3-50 weight percent of a phosphate-based flame retardant; and
C. 0.3-6 weight percent of a low molecular weight epoxide additive other than a novolak polymer or an olefin-based polymer comprising an epoxy group, wherein the low molecular weight epoxide has a molecular weight of less than 700 g/mol.

2. The composition of Claim 1 in which the low molecular weight epoxide additive is 1,3,5-triglycidyl-isocyanurate.

3. The composition of Claim 1 further comprising a metal hydrate flame retardant.

4. The composition of Claim 1 further comprising a hindered amine light stabilizer.

5. The composition of Claim 1 further comprising a UV light absorber.

6. The composition of Claim 1 further comprising an antioxidant.

7. The composition of Claim 1 further comprising an olefin polymer.

8. The composition of Claim 7 in which the olefin polymer is at least one of very low density polyethylene, homogeneously branched, linear ethylene/α-olefin copolymers, homogeneously branched, substantially linear ethylene/α-olefin polymers, olefin block copolymers and other alkene-based copolymers.

## Patentansprüche

1. Eine farbstabile, halogenfreie Flammenhemmstoffzusammensetzung, die Folgendes beinhaltet, basierend auf dem Gewicht der Zusammensetzung:
A. 10-95 Gewichtsprozent eines thermoplastischen Polyurethanpolymers;
B. 3-50 Gewichtsprozent eines auf Phosphat basierenden Flammenhemmstoffs; und
C. 0,3-6 Gewichtsprozent eines niedermolekularen Epoxidzusatzstoffs, welcher kein Novolakpolymer ist, oder eines auf Olefin basierenden Polymers, welches eine Epoxidgruppe beinhaltet, wobei das niedermolekulare Epoxid eine Molekülmasse von weniger als 700 g/mol aufweist.

2. Zusammensetzung gemäß Anspruch 1, wobei der niedermolekulare Epoxidzusatzstoff 1,3,5-Triglycidylisocyanurat ist.

3. Zusammensetzung gemäß Anspruch 1, die ferner einen Metallhydratflammenhemmstoff beinhaltet.

4. Zusammensetzung gemäß Anspruch 1, die ferner einen gehinderten Amin-Lichtstabilisator beinhaltet.

5. Zusammensetzung gemäß Anspruch 1, die ferner einen UV-Licht-Absorber beinhaltet.

6. Zusammensetzung gemäß Anspruch 1, die ferner ein Antioxidationsmittel beinhaltet.

7. Zusammensetzung gemäß Anspruch 1, die ferner ein Olefinpolymer beinhaltet.

8. Zusammensetzung gemäß Anspruch 7, wobei das Olefinpolymer mindestens eines von Polyethylen mit sehr geringer Dichte, homogen verzweigten, linearen Ethylen/α-Olefincopolymeren, homogen verzweigten, im Wesentlichen linearen Ethylen/α-Olefinpolymeren, Olefinblockcopolymeren und anderen auf Alken basierenden Copolymeren ist.

## Revendications

1. Une composition ignifuge sans halogène et de couleur stable comprenant, rapporté au poids de la composition :
A. 10 à 95 pour cent en poids d'un polymère polyuréthane thermoplastique ;
B. 3 à 50 pour cent en poids d'un ignifuge à base de phosphate ; et
C. 0,3 à 6 pour cent en poids d'un additif époxyde de faible masse moléculaire autre qu'un polymère novolaque ou un polymère à base d'oléfine comprenant un groupe époxy, dans laquelle l'époxyde de faible masse moléculaire a une masse moléculaire inférieure à 700 g/mol.

2. La composition de la revendication 1 dans laquelle l'additif époxyde de faible masse moléculaire est le 1,3,5-triglycidyl-isocyanurate.

3. La composition de la revendication 1 comprenant en outre un ignifuge hydrate de métal.

4. La composition de la revendication 1 comprenant en outre un photostabilisant amine encombré.

5. La composition de la revendication 1 comprenant en outre un absorbeur de lumière ultraviolette.

6. La composition de la revendication 1 comprenant en outre un antioxydant.

7. La composition de la revendication 1 comprenant en outre un polymère d'oléfine.

8. La composition de la revendication 7 dans laquelle le polymère d'oléfine est au moins un élément parmi le polyéthylène à très faible densité, les copolymères d'éthylène/α-oléfine linéaires ramifiés de façon homogène, les polymères d'éthylène/α-oléfine substantiellement linéaires ramifiés de façon homogène, les copolymères blocs d'oléfine et d'autres copolymères à base d'alcène.
